# EUROPÄISCHE PATENTSCHRIFT

(11) **EP 3 107 705 B1**
(45) Veröffentlichungstag und Bekanntmachung des Hinweises auf die Patenterteilung: **16.10.2019**
(21) Anmeldenummer: 15704541.0
(22) Anmeldetag: 13.02.2015
(51) Int. Cl.: B29C 45/14, B29C 45/78, B29K 675/00

(54) **VERFAHREN ZUR HERSTELLUNG EINES VERBUNDBAUTEILS**
METHOD FOR PRODUCING A COMPOSITE PART
PROCÉDÉ DE FABRICATION D'UN ÉLÉMENT COMPOSITE

(30) Priorität: 20.02.2014 EP 14155924
(43) Veröffentlichungstag der Anmeldung: 28.12.2016
(73) Patentinhaber: BASF SE, 67056 Ludwigshafen am Rhein (DE)
(72) Erfinder: LAMBERT, Jürgen, 67377 Gommersheim (DE); OBERMANN, Christian, 67346 Speyer (DE); BARTL, Jürgen, 67063 Ludwigshafen (DE); MEDERT, Andreas, 68623 Lampertheim (DE)
(86) Internationale Anmeldenummer: PCT/EP2015/053103
(87) Internationale Veröffentlichungsnummer: WO 2015/124505

(56) Entgegenhaltungen:
- EP-A1- 1 022 105
- EP-A1- 1 095 752
- EP-A2- 0 268 954
- EP-A2- 2 540 471
- US-A- 5 681 519
- US-A- 5 989 473
- US-A1- 2002 176 980
- US-A1- 2006 147 697
- US-B1- 7 045 206

## Beschreibung

Die Erfindung betrifft ein Verfahren zur Herstellung eines Verbundbauteils, umfassend einen Formkörper aus einem thermoplastischen Polymerschaum und eine Funktionsschicht aus einem ungeschäumten Thermoplasten.

Verbundbauteile mit einem Formkörper aus einem thermoplastischen Polymerschaum und einer Funktionsschicht aus einen ungeschäumten Thermoplasten finden Anwendung zum Beispiel als Deckel-Dichtungssysteme, Transportbehälter mit elastischen Griffbereichen, Behälter mit elastischen Einlagen, Spielzeug mit elastischen Bereichen, usw.

Derzeit wird insbesondere expandierbares beziehungsweise expandiertes thermoplastisches Polyurethan auf handelsüblichen Partikelschaumstoff-Formteilautomaten verarbeitet. Bei diesen werden Partikel aus dem expandierbaren thermoplastischen Polyurethan in ein Formwerkzeug eingebracht, das anschließend mit heißem Wasserdampf durchströmt wird. Durch den heißen Wasserdampf wird das thermoplastische Polyurethan erweicht, so dass dieses aufgrund des darin enthaltenen Treibmittels aufschäumen kann. Hierdurch füllen die Partikel das Werkzeug vollständig aus und es entsteht ein Überdruck im Inneren des Werkzeugs. Durch diesen Überdruck werden die expandierten und aufgrund der hohen Temperatur des Wasserdampfs erweichten Partikel aus thermoplastischem Polyurethan miteinander zu dem gewünschten Formteil verschweißt. Wenn das so hergestellte Formteil aus einem Partikelschaum mit einem weiteren Polymer verbunden werden soll, müssen herkömmliche Fügetechniken eingesetzt werden. So kann eine Verbindung zum Beispiel durch Verkleben oder Verschweißen realisiert werden. Alternativ ist es auch möglich, in das Formteil aus dem Partikelschaum Metalleinleger einzubringen, in denen ein weiteres Bauteil mit einer Schraubverbindung angebracht werden kann.

Ein mögliches Verfahren zur Herstellung eines Werkstoffverbundes aus einem Partikelschaum aus einem thermoplastischen Kunststoff und mindestens einer mit dem Partikelschaum verbundenen Schicht ist in DE-A 100 36 185 beschrieben. Hierzu werden vorgeschäumte Partikel auf einen Temperatur im Bereich der Schmelztemperatur erhitzt und miteinander zu einem Formkörper verbunden. Währenddessen oder anschließend werden die Partikel mit der Schicht verbunden. Die Schicht, mit der die vorgeschäumten Partikel verbunden werden, ist eine Folie, die gegebenenfalls faserverstärkt ist oder ein flächiges, ungeschäumtes Bauteil, das die Form der gewünschten Oberfläche aufweist. Die Verbindung der Schicht mit dem Formteil aus dem Partikelschaum erfolgt durch auflaminieren, indem das Formteil an seiner Oberfläche auf Schmelztemperatur erwärmt wird, um anschließend das Formteil aus dem Partikelschaum mit der Schicht zu verbinden.

Nachteil aller aus dem Stand der Technik bekannten Verfahren ist, dass es nicht möglich ist, eine beliebige Geometrie des Verbunds aus Formteil aus Polymerschaum und einem weiteren ungeschäumten Polymer herzustellen. Insbesondere ist es nicht möglich, Hinterschnitte oder Hinterspritzungen zu realisieren. Zudem sind viele unabhängige Verfahrensschritte notwendig, die die Herstellung aufwendig machen.

Aufgabe der vorliegenden Erfindung war es daher, ein Verfahren bereitzustellen, das es ermöglicht, Verbundwerkstücke mit einem Kern aus einem Polymerschaum und einer Funktionsschicht aus einem ungeschäumten Thermoplasten, mit einem geringeren Aufwand als aus dem Stand der Technik bekannt, herzustellen und mit dem zudem auch komplexe Geometrien hergestellt werden können.

Diese Aufgabe wird gelöst durch ein Verfahren zur Herstellung eines Verbundbauteils, umfassend einen Formkörper aus einem thermoplastischen Polymerschaum und eine Funktionsschicht aus einem ungeschäumten Thermoplasten, das folgende Schritte umfasst:
(a) Einlegen des Formkörpers aus thermoplastischem Polymerschaum in ein Formwerkzeug,
(b) Aufbringen eines thermoplastischen Polymers durch einen Spritzprozess, wobei der Druck beim Aufbringen des thermoplastischen Polymeren kleiner ist als 100 bar.

Das Aufbringen des thermoplastischen Polymers zur Herstellung der Funktionsschicht durch einen Spritzprozess erlaubt es, beliebige Geometrien der Funktionsschicht zu realisieren. Insbesondere ist es hierdurch möglich, auch Geometrien herzustellen, die Hinterspritzungen, Hinterschnitte oder ähnliche durch die aus dem Stand der Technik bekannten Verfahren nur schwer oder unmöglich zu herzustellende Formen umfassen, aufweisen.

Üblicherweise wird bei der Herstellung einer Funktionsschicht auf einem Formkörper aus einem thermoplastischen Polymerschaum vermieden, Spritzprozesse einzusetzen, da diese bei hohen Drücken durchgeführt werden, die den Polymerschaum während der Herstellung zusammenpressen, so dass die gewünschten Eigenschaften, aufgrund derer der Polymerschaum eingesetzt wird, verloren gehen. Überraschenderweise hat sich nun gezeigt, dass bei einem Aufbringen des thermoplastischen Polymers durch einen Spritzprozess mit einem Druck von weniger als 100 bar der das Formteil bildende Polymerschaum nur leicht komprimiert wird, so dass die gewünschten Eigenschaften des durch das erfindungsgemäße Verfahren hergestellten Verbundbauteils erhalten bleiben, insbesondere die Elastizität und Kompressibilität des Polymerschaums.

Je nach Druck, mit dem der Spritzprozess zum Aufbringen des thermoplastischen Polymers für die Funktionsschicht durchgeführt wird, und in Abhängigkeit von der Kompressibilität des Polymerschaums kann die Dicke des Formteils aus Polymerschaum im fertigen Verbundbauteil nur noch 70% der ursprünglichen Dicke betragen. Bevorzugt ist es jedoch, wenn die Dicke des Formteils aus Polymerschaum im fertigen Verbundbauteil 80 bis 95 % der ursprünglichen Dicke des Formteils entspricht. Um dies zu erreichen, muss der Druck in Abhängigkeit von der Kompressibilität des Formteils eingestellt werden. So erfordert eine stärkere Kompressibilität einen geringeren Druck.

Der thermoplastische Polymerschaum, aus dem der Formkörper gefertigt ist, kann jeder offenzellige oder geschlossenzellige Polymerschaum sein, der aus einem thermoplastischen Kunststoff hergestellt werden kann. Besonders bevorzugt ist der thermoplastische Polymerschaum ein Partikelschaum.

Die Herstellung des Formkörpers aus dem Polymerschaum kann auf jede beliebige, dem Fachmann bekannte Art erfolgen. So können zum Beispiel Bahnen aus einem geschäumten Polymer hergestellt werden und die Formteile aus den Bahnen ausgeschnitten werden. Wenn der Polymerschaum, aus dem das Formteil hergestellt ist, ein Partikelschaum ist, kann das Formteil durch jedes dem Fachmann bekannte Verfahren zur Herstellung von Formteilen aus einem Partikelschaum hergestellt werden. So ist es zum Beispiel möglich, Granulat aus einem expandierbaren thermoplastischen Polymer in ein Formwerkzeug einzufüllen, durch Erwärmen das Granulat zu Schaumpartikel zu expandieren und die warmen Schaumpartikel anschließend durch Druck miteinander zu verbinden. Der Druck entsteht dabei durch das Aufschäumen der Partikel, deren Volumen sich in gleichbleibendem Innenvolumen des Formwerkzeugs vergrößert. Eine gleichmäßige Erwärmung lässt sich beispielsweise durch Durchströmung des Formwerkzeugs mit Wasserdampf realisieren. Alternativ ist es allerdings auch möglich, bereits expandierte Partikel in das Formwerkzeug einzufüllen. In diesem Fall wird das Formwerkzeug zunächst vollständig befüllt. In einem weiteren Schritt wird das Volumen des Formwerkzeugs durch Einschieben eines Stempels an der Einfüllöffnung, die ebenfalls vollständig mit expandierten Partikeln gefüllt ist, verkleinert, so dass sich der Druck im Formwerkzeug erhöht. Hierdurch werden die expandierten Partikel aneinandergepresst, so dass diese zum Formteil verschweißt werden können. Die Verschweißung der Partikel erfolgt auch hier insbesondere durch Durchleitung mit Wasserdampf.

Der Spritzprozess, mit dem das thermoplastische Polymer aufgebracht wird, kann zum Beispiel ein Spritzgießprozess, ein Spritzpressprozess oder ein Spritzprägeprozess sein. Der Spritzgießprozess, Spritzpressprozess beziehungsweise Spritzprägeprozess wird dabei so durchgeführt, wie ein Spritzgießprozess, Spritzpressprozess oder Spritzprägeprozess üblicherweise durchgeführt wird, bei dem ein Einlegeteil mit einer Umhüllung versehen wird. Hierbei ist es einerseits möglich, das Formteil aus thermoplastischem Polymer in ein Formwerkzeug für den Spritzgießprozess, Spritzpressprozess oder Spritzprägeprozess einzulegen und dann das thermoplastische Polymer aufzubringen. Alternativ ist es auch möglich, für das Umspritzen oder Umpressen das gleiche Werkzeug zu nutzen, in dem auch das Formteil aus dem Polymerschaum hergestellt wird. Hierzu werden üblicherweise Werkzeuge mit verschiebbarem Kern genutzt. Wenn das thermoplastische Polymer nur einseitig auf das Formteil aus Polymerschaum aufgebracht werden soll, ist es alternativ auch möglich, nach dem Herstellen des Formteils aus Polymerschaum eine Werkzeughälfte zu entfernen und die zweite Werkzeughälfte, in der das Formteil liegen bleibt, mit einer neuen Werkzeughälfte zu verschließen, in die dann das thermoplastische Polymer für die Funktionsschicht eingespritzt oder eingepresst wird.

Um das Formteil aus dem Polymerschaum um nicht mehr als 30%, insbesondere nicht mehr als 5 bis 15 % zu komprimieren, wird der Spritzgießprozess mit einem Druck von weniger als 100 bar, einem Nachdruck von weniger als 50 bar und einer Einspritzgeschwindigkeit von weniger als 100 mm/s durchgeführt wird. Bevorzugt wird der Spritzgießprozess mit einem Druck im Bereich von 20 bis 60 bar und einem Nachdruck im Bereich von 10 bis 30 bar durchgeführt. Die Einspritzgeschwindigkeit liegt vorzugsweise im Bereich von 10 bis 50 mm/s.

Der Spritzgießprozess kann mit jedem beliebigen, dem Fachmann bekannten Angusssystem durchgeführt werden. Der Angussquerschnitt am Bauteil liegt dabei üblicherweise im Bereich von 0,5 bis 10 mm, bevorzugt im Bereich von 1,0 bis 6,0 mm. Es können sowohl Heißkanalsysteme als auch Kaltkanalsysteme zum Aufspritzen des thermoplastischen Polymers genutzt werden. Zum Steuern der Schmelze aus dem thermoplastischen Polymer, das auf das Formteil aus Polymerschaum aufgebracht wird, können auch Kaskadensysteme zum Einspritzen oder Einbringen eingesetzt werden. Dies ist insbesondere vorteilhaft, wenn das thermoplastische Polymer auf große Flächen auf dem Formteil aus Polymerschaum aufgebracht werden soll. Eine Kaskadensteuerung ist sowohl beim Spritzgießen als auch beim Spritzpressen möglich.

Die Massetemperatur des thermoplastischen Polymers, das in Schritt (b) aufgebracht wird, liegt vorzugsweise im Bereich von 180 bis 260°C. Die Temperatur ist dabei abhängig vom eingesetzten Polymer für den Polymerschaum und dem thermoplastischen Polymer, das auf das Formteil aus Polymerschaum aufgebracht wird. Die Temperatur muss so hoch sein, dass das thermoplastische Polymer, das auf das Formteil aufgebracht wird, im Spritzprozess verarbeitbar ist. Zudem muss die Temperatur so hoch sein, dass das thermoplastische Polymer des Formteils angeschmolzen wird, um eine gute Verbindung zu erhalten. Die Temperatur darf andererseits aber nicht so hoch sein, dass eine dickere Schicht des Formteils angeschmolzen wird, da hierdurch der Schaum des Formteils geschädigt wird. Bevorzugt ist es, wenn die Temperatur des thermoplastischen Polymers, das in Schritt (b) auf das Formteil aufgebracht wird, im Bereich von 190 bis 240°C liegt.

Um ein gleichmäßiges Einströmen des thermoplastischen Polymers in das Werkzeug für den Spritzprozess zu ermöglichen und zudem ein ausreichend schnelles Aushärten, um den Prozess wirtschaftlich führen zu können, wird das Formwerkzeug vorzugsweise auf eine Temperatur im Bereich von 10 bis 60°C temperiert, insbesondere auf eine Temperatur im Bereich von 20 bis 40°C.

Als Polymer für den thermoplastischen Polymerschaum kann jedes beliebige thermoplastische Polymer, das sich schäumen lässt, eingesetzt werden. Bevorzugt ist es, wenn der Polymerschaum aus einem expandierten thermoplastischen Polyurethan (E-TPU) oder einem biologisch abbaubaren, aliphatisch-aromatischen Copolyester, beispielsweise erhältlich als Ecoflex ® der BASF SE, aufgebaut ist.

Das thermoplastische Polymer das auf das Formteil aus Polymerschaum aufgebracht wird, kann ebenfalls jedes beliebige thermoplastische Polymer sein. Bevorzugt ist das thermoplastisehe Polymer, das in Schritt (b) aufgebracht wird, ausgewählt aus Polyamid (PA), thermoplastischem Polyurethan (TPU), Acrylnitril-Butadien-Styrol (ABS), Styrol-Acrylnitril (SAN), Acrylester-Styrol-Acrylnitril (ASA), Acrylester-Styrol-Acrylnitril/Polycarbonat-Blend (ASA/PC), Polycarbonat (PC), Acrylnitril-Butadien-Styrol/Polycarbonat-Blend (ABS/PC), Acrylnitril-Butadien-Styrol/Polyamid-Blend (ABS/PA), Styrol-Butadien-Copolymer (SB) und Polymethylmethacrylat (PMMA). Das eingesetzte thermoplastische Polymer kann verstärkt sein. Zur Verstärkung können zum Beispiel Faser, beispielsweise Kurzfasern oder Langfasern eingesetzt werden. Als Fasermaterial eignen sich zum Beispiel Glas, Kohlenstoff, Aramid, Basalt. Weiterhin ist es möglich, das thermoplastische Polymer mit einem Flammschutz auszurüsten. Als Flammschutzadditiv kann jeder dem Fachmann bekannte und geeignete Flammschutz für das verwendete thermoplastische Polymer eingesetzt werden.

Um die Haftung des thermoplastischen Polymeren auf dem Formteil aus Polymerschaum zu verbessern, ist es möglich, das Formteil vorzubehandeln, beispielsweise durch eine Corona- oder Plasmabehandlung.

Weiterhin kann das Formteil aus Polymerschaum auch geometrisch so gestaltet werden, dass eine verbesserte Haftung erzielt wird. So ist es zum Beispiel möglich, einen Schaum mit einem erhöhten Zwickelanteil, vorzugsweise im Bereich von 10 bis 50% einzusetzen. Beim Aufbringen des thermoplastischen Polymers kann die Schmelze in die durch die Zwickel gebildeten Hohlräume fließen, wodurch die Haftung verbessert wird.

Weiterhin erlaubt es das erfindungsgemäße Verfahren, ein Formteil aus Polymerschaum mit Durchbrüchen oder Hinterschnitten zu gestalten. Die Schmelze des thermoplastischen Polymers kann beim Aufbringen in Schritt (b) in die Durchbrüche oder die Hinterschnitte fließen, wodurch die Haftung ebenfalls verbessert wird.

Die Funktionsschicht, die durch das erfindungsgemäße Verfahren auf das Formteil aus dem Polymerschaum aufgebracht wird, weist vorzugsweise eine Dicke im Bereich von 0,2 bis 10 mm auf. Bevorzugt ist die Dicke der Funktionsschicht im Bereich von 0,5 bis 3 mm. Funktionsschichten mit einer geringen Dicke können insbesondere genutzt werden, um eine gewünschte Oberflächenstruktur oder auch eine glatte Oberfläche zu realisieren. Größere Dicken der Funktionsschicht ermöglichen insbesondere die Nutzung für bestimmte Anwendungen oder zur Verstärkung. So ist es bei einer größeren Dicke zum Beispiel möglich, an die Funktionsschicht Funktionselemente anzuformen. Derartige Funktionselemente sind zum Beispiel Rippen zur Verstärkung des Verbundbauteils. Das Anformen der Funktionselemente kann einerseits bereits im Spritzprozess durch Einsatz eines entsprechenden Formwerkzeugs erfolgen, andererseits ist es auch möglich, die Funktionselemente in einem weiteren Schritt an die Funktionsschicht anzuformen, beispielsweise durch Aufspritzen oder Anschweißen.

Weiterhin wird es durch die Funktionsschicht auch ermöglicht, Strukturen auf die Oberfläche des Verbundbauteils aufzubringen. Die Strukturen, können zum Beispiel durch Erodieren, Fräsen oder Laserverfahren erzeugt werden. Weiterhin ist es möglich, das Verbundbauteil einzufärben, indem zum Beispiel eine farbige Funktionsschicht aufgebracht wird oder die Funktionsschicht aus einem lackierfähigen Kunststoff hergestellt wird oder oberflächenmodifiziert wird, um eine Lackierung aufzubringen. Eine solche Oberflächenmodifikation kann zum Beispiel durch eine Corona- oder Plasmabehandlung realisiert werden.

Ausführungsbeispiele der Erfindung sind in den Figuren dargestellt und werden in der nachfolgenden Beschreibung näher erläutert.

Es zeigen:
- Figur 1: eine Vorrichtung zur Durchführung des erfindungsgemäßen Verfahrens,
- Figur 2: eine dreidimensionale schematische Darstellung eines Werkzeugs zur Durchführung des Verfahrens.
- Figur 3: eine Schnittansicht durch ein erfindungsgemäßes Verbundbauteil

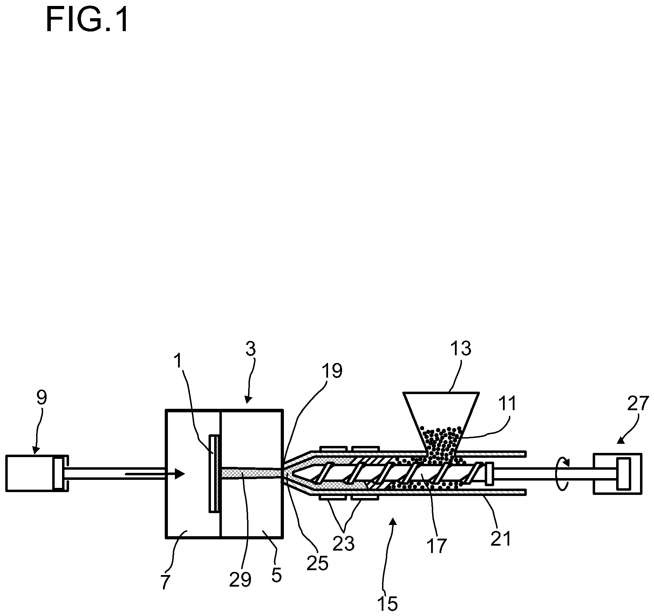

In Figur 1 ist eine Vorrichtung zur Durchführung des erfindungsgemäßen Verfahrens dargestellt.

Um ein Verbundbauteil aus Formteil 1 aus einem Polymerschaum mit einer Funktionsschicht aus einem thermoplastischen Polymer herzustellen, wird das Formteil 1 aus Polymerschaum in ein Formwerkzeug 3 für einen Spritzprozess eingelegt.

Das Einlegen des Formteils 1 aus Polymerschaum kann zum Beispiel realisiert werden, indem das Formteil 1 in eine erste Werkzeughälfte 5 des Formwerkzeugs 3 eingelegt wird. Anschließend wird die erste Werkzeughälfte 5 mit einer zweiten Werkzeughälfte 7 verschlossen. Zum Verschließen ist hier schematisch eine Schließeinheit 9 dargestellt, mit der die zweite Werkzeughälfte 7 in Richtung der ersten Werkzeughälfte 5 verschoben wird, bis die beiden Werkzeughälften 5, 7 geschlossen sind. Neben dem Einlegen des Formteils 1 aus Polymerschaum in die erste Werkzeughälfte 5 ist es selbstverständlich auch möglich, das Formteil 1 aus Polymerschaum in die zweite Werkzeughälfte 7 einzulegen und die zweite Werkzeughälfte 5 mitsamt dem Formteil 1 aus Polymerschaum in Richtung der ersten Werkzeughälfte 5 zu verschieben, bis das Formwerkzeug 3 geschlossen ist.

Nach dem Verschließen des Formwerkzeugs 3 mit dem darin positionierten Formteil 1 aus Polymerschaum wird ein thermoplastisches Polymer in das Formwerkzeug eingespritzt. Dies erfolgt in der hier dargestellten Ausführungsform durch einen Spritzgießprozess. Bei einem Spritzgießprozess wird üblicherweise ein Granulat 11 aus einem thermoplastischen Polymer über eine Zugabeeinheit, beispielsweise einen Einfülltrichter 13, einer Schneckenkolbenmaschine 15 zugeführt. In der Schneckenkolbenmaschine 15 wird das Granulat durch Rotation einer Schnecke 17 in Richtung einer Düse 19 transportiert. In der Schneckenkolbenmaschine 15 wird das Granulat zunächst kompaktiert und dann aufgeschmolzen. Das Aufschmelzen erfolgt bereits teilweise aufgrund einer Temperaturerhöhung beim Kompaktieren. Zusätzlich weist das Gehäuse 21 der Schneckenkolbenmaschine 15 üblicherweise mit Heizvorrichtungen, beispielsweise Heizbändern 23 von außen beheizt, um das Schmelzen des Granulats aus thermoplastischem Polymer zu unterstützen. Vor der Düse 19 befindet sich ein Schmelzereservoir 25, in das die Schmelze gefördert wird. Sobald das Schmelzereservoir 25 gefüllt ist und das Formwerkzeug 3 geschlossen ist, wird die Schnecke mit Hilfe einer Vorschubeinheit 27 axial in Richtung der Düse 19 bewegt. Hierdurch wird die Schmelze aus dem Schmelzereservoir 25 durch die Düse 19 und ein Kanalsystem 29 in das Formwerkzeug 3 gepresst und fließt dort in die nicht vom Formteil 1 aus Polymerschaum ausgefüllten Bereiche.

Nach dem Einpressen der Schmelze in das Formwerkzeug wird die Schnecke 17 wieder in die Ausgangsposition zurückbewegt und neue Schmelze in das Schmelzereservoir 25 transportiert. Gleichzeitig kühlt die Schmelze in dem Formwerkzeug 3 ab und wird fest. Sobald eine ausreichende Festigkeit des eingespritzen Polymers erreicht ist, wird das Formwerkzeug 3 geöffnet und das so hergestellte Verbundbauteil entnommen.

Erfindungsgemäß wird der Spritzprozess mit einem Einspritzdruck von maximal 100 bar und einem Nachdruck von maximal 50 bar durchgeführt, um eine Schädigung des Formteils 3 aus Polymerschaum zu verhindern und die gewünschten Eigenschaften des Verbundbauteils mit dem Kern aus dem Formteil 1 aus Polymerschaum zu erhalten. Der Einspritzdruck und der Nachdruck werden dabei an der Vorschubeinheit für die Schnecke gemessen. Dies führt auch dazu, dass die die Düse 19 in das Kanalsystem 29 verlassende Schmelze einen geringeren Druck aufweist. Allerdings muss der Druck hinreichend groß gehalten werden, damit die Schmelze alle Hohlräume im Formwerkzeug 3 ausfüllt. Hierbei kann der Druck umso niedriger gewählt werden, umso niedriger die Viskosität der Schmelze ist.

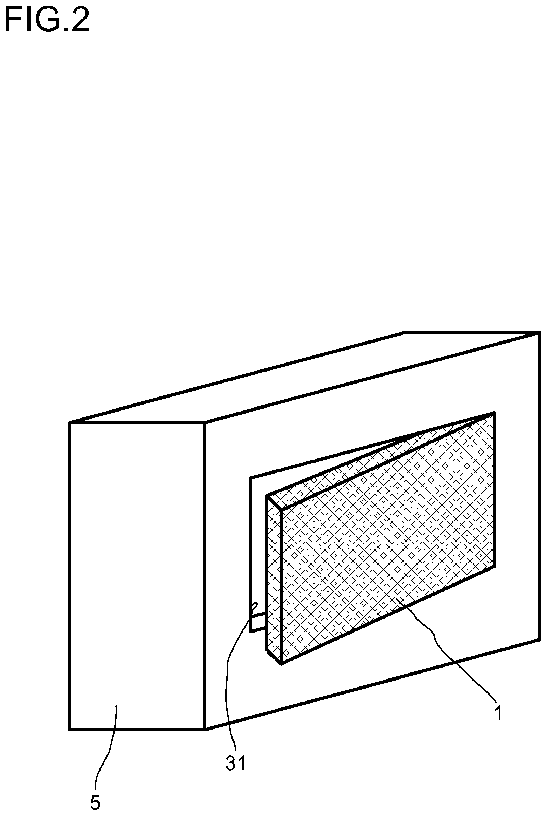

Figur 2 zeigt beispielhaft das Einlegen des Formteils 1 aus Polymerschaum in die erste Werkzeughälfte 5 des Formwerkzeugs 3. Hierbei ist in der ersten Werkzeughälfte 5 eine Kavität 31 ausgebildet, in der das Formteil 1 aus Polymerschaum aufgenommen werden kann. Wenn das Formteil 1 aus Polymerschaum allseitig umspritzt werden soll, ist es notwendig, Halterungen vorzusehen, mit denen das Formteil 1 aus Polymerschaum an seiner Position gehalten wird. Die Halterungen können dabei auf die gleiche Weise gestaltet sein, wie sie üblicherweise für Prozesse eingesetzt werden, bei denen ein fester Kern mit einem thermoplastischen Polymer umspritzt oder hinterspritzt wird.

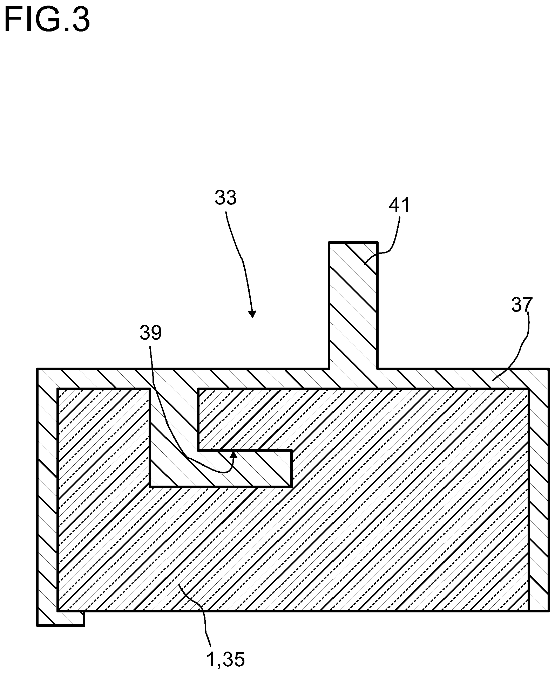

In Figur 3 ist ein Schnitt durch ein beispielhaftes Verbundbauteil gezeigt, wie es durch das erfindungsgemäße Verfahren hergestellt werden kann.

Das Verbundbauteil 33 umfasst einen Kern 35, der aus dem Formteil 1 aus Polymerschaum gebildet wird. Um diesen Kern 35 ist eine Funktionsschicht 37 ausgebildet. Die Funktionsschicht 37 kann dabei den Kern 35 vollständig umschließen oder nur in bestimmten Bereichen auf dem Kern 35 aufgebracht sein. Dies ist insbesondere dann sinnvoll, wenn nur eine einseitige Beschichtung des Kerns 35 gewünscht ist, um beispielsweise eine vorgegebene Oberflächenstruktur zu erhalten, beispielsweise eine Dekorstruktur oder eine glatte Oberfläche. Auch lassen sich auf diese Weise nur die sichtbaren Bereiche des Verbundbauteils 33 mit einer Funktionsschicht 37, die dann beispielsweise auch lackiert werden kann, versehen.

Durch das erfindungsgemäße Verfahren ist es möglich, auch einen Formkörper 1 aus Polymerschaum, der Hinterschnitte 39 aufweist, mit einer Funktionsschicht zu versehen. Die Hinterschnitte 39 haben den weiteren Vorteil, dass die Funktionsschicht 37 besser auf dem Formkörper 1 aus Polymerschaum hält, da durch die Hinterschnitte 39 und das in die Hinterschnitte 39 geflossene thermoplastische Polymer der Funktionsschicht 37 zusätzlich eine mechanische Verbindung erzeugt wird.

Neben einer Beschichtung des Formkörpers 1 aus Polymerschaum mit einer Funktionsschicht 37 für Dekorationszwecke ist es auch möglich, durch die Funktionsschicht 37 technische Eigenschaften einzustellen. So kann zum Beispiel durch die Funktionsschicht 37 die mechanische Stabilität des Verbundbauteils 33 verbessert werden. Zusätzlich ist es möglich, die Funktionsschicht 37 mit Funktionselementen 41 zu versehen. Die Funktionselemente 41 können beispielsweise in einem nachfolgenden Spritzprozess an die Funktionsschicht 37 angespritzt werden. Alternativ ist es auch möglich, die Funktionselemente 41 gleichzeitig mit der Funktionsschicht 37 im Spritzprozess in Schritt (b) zu formen. Weiterhin besteht auch die Möglichkeit, die Funktionselemente 41 in einem nachfolgenden Schritt an die Funktionsschicht anzuschweißen. Funktionselemente 41 sind zum Beispiel Rippen zur Verstärkung des Verbundbauteils 33, Erhebungen, in die Gewinde eingebracht werden können oder Außengewinde, die an der Funktionsschicht angebracht sind, um eine lösbare mechanische Verbindung mit einem weiteren Bauteil realisieren zu können. Weiterhin können die Funktionselemente auch Clipse, Abstandshalter, Dichtelemente oder beliebige andere Elemente zur Ausübung bestimmter Funktionen sein.

Je nach Art der Herstellung der Funktionselemente 41 können diese aus dem gleichen thermoplastischen Polymer gefertigt sein wie die Funktionsschicht 37 oder auch aus einem anderen Polymer, das mit dem thermoplastischen Polymer der Funktionsschicht 37 verbunden werden kann.

### Bezugszeichenliste

- 1: Formteil
- 3: Formwerkzeug
- 5: erste Werkzeughälfte
- 7: zweite Werkzeughälfte
- 9: Schließeinheit
- 11: Granulat
- 13: Einfülltrichter
- 15: Schneckenkolbenmaschine
- 17: Schnecke
- 19: Düse
- 21: Gehäuse
- 23: Heizband
- 25: Schmelzereservoir
- 27: Vorschubeinheit
- 29: Kanalsystem
- 31: Kavität
- 33: Verbundbauteil
- 35: Kern
- 37: Funktionsschicht
- 39: Hinterschnitt
- 41: Funktionselement

## Patentansprüche

1. Verfahren zur Herstellung eines Verbundbauteils (33), umfassend einen Formkörper (1) aus einem thermoplastischen Polymerschaum aus einem expandierten thermoplastischen Polyurethan (E-TPU) und eine Funktionsschicht (37) aus einem ungeschäumten Thermoplasten, folgende Schritte umfassend:
(a) Einlegen des Formkörpers (1) aus thermoplastischem Polymerschaum in ein Formwerkzeug (3),
(b) Aufbringen eines thermoplastischen Polymers durch einen Spritzprozess, wobei der Druck beim Aufbringen des thermoplastischen Polymeren kleiner ist als 100 bar,
wobei der thermoplastische Polymerschaum ein Partikelschaum ist und die Oberfläche des Formteils (1) aus Polymerschaum vorbehandelt wird, wobei die Vorbehandlung der Oberfläche des Formteils (1) aus Polymerschaum eine Coronabehandlung oder Plasmabehandlung umfasst.

2. Verfahren gemäß Anspruch 1, **dadurch gekennzeichnet, dass** der Spritzprozess ein Spritzgießprozess, ein Spritzpressprozess oder ein Spritzprägeprozess ist.

3. Verfahren gemäß Anspruch 2, **dadurch gekennzeichnet, dass** der Spritzgießprozess mit einem Druck von weniger als 100 bar, einem Nachdruck von weniger als 50 bar und einer Einspritzgeschwindigkeit von weniger als 100 mm/s durchgeführt wird.

4. Verfahren gemäß einem der Ansprüche 1 bis 3, **dadurch gekennzeichnet, dass** der thermoplastische Polymerschaum ein Partikelschaum ist.

5. Verfahren gemäß einem der Ansprüche 1 bis 4, **dadurch gekennzeichnet, dass** das thermoplastische Polymer, das in Schritt (b) aufgebracht wird, ausgewählt ist aus Polyamid, thermoplastischem Polyurethan, Acrylnitril-Butadien-Styrol, Styrol-Acrylnitril, Acrylester-Styrol-Acrylnitril, Acrylester-Styrol-Acrylnitril/Polycarbonat-Blend, Polycarbonat, Acrylnitril-Butadien-Styrol/Polycarbonat-Blend, Acrylnitril-Butadien-Styrol/Polyamid-Blend, Styrol-Butadien-Copolymer und Polymethylmethacrylat.

6. Verfahren gemäß einem der Ansprüche 1 bis 5, **dadurch gekennzeichnet, dass** das Formteil (1) aus Polymerschaum aus einem Polymerschaum mit einem Zwickelanteil im Bereich von 10 bis 50 % gefertigt ist.

7. Verfahren gemäß einem der Ansprüche 1 bis 6, **dadurch gekennzeichnet, dass** die Massetemperatur des thermoplastischen Polymers, das in Schritt (b) aufgebracht wird, im Bereich von 180 bis 260°C liegt.

8. Verfahren gemäß einem der Ansprüche 1 bis 7, **dadurch gekennzeichnet, dass** das Formwerkzeug (3) auf eine Temperatur im Bereich von 10 bis 60°C temperiert wird.

9. Verfahren gemäß einem der Ansprüche 1 bis 8, **dadurch gekennzeichnet, dass** die Funktionsschicht (37) eine Dicke im Bereich von 0,2 bis 10 mm aufweist.

10. Verfahren gemäß einem der Ansprüche 1 bis 9, **dadurch gekennzeichnet, dass** an der Funktionsschicht (37) Funktionselemente (41) angeformt sind.

## Claims

1. A process for the production of a composite component (33) which comprises a molding (1) made of a thermoplastic polymer foam made of an expanded thermoplastic polyurethane (ETPU) and which comprises a functional layer (37) made of an unfoamed thermoplastic, comprising the following steps:
(a) insertion of the molding (1) made of thermoplastic polymer foam into a mold (3),
(b) application of a thermoplastic polymer by an injection process, where the pressure during the application of the thermoplastic polymer is smaller than 100 bar,
where the thermoplastic polymer foam is a particle foam and the surface of the molding (1) made of polymer foam is pretreated, where the pretreatment of the surface of the molding (1) made of polymer foam comprises a corona treatment or plasma treatment.

2. The process according to claim 1, wherein the injection process is an injection-molding process, a transfer-molding process, or an injection-compression-molding process.

3. The process according to claim 2, wherein the injection-molding process is carried out with a pressure of less than 100 bar, with a holding pressure of less than 50 bar, and with an injection speed of less than 100 mm/s.

4. The process according to any of claims 1 to 3, wherein the thermoplastic polymer foam is a particle foam.

5. The process according to any of claims 1 to 4, wherein the thermoplastic polymer applied in step (b) is selected from polyamide, thermoplastic polyurethane, acrylonitrile-butadiene-styrene, styrene-acrylonitrile, acrylate-styrene-acrylonitrile, acrylate-styrene-acrylonitrile/polycarbonate blend, polycarbonate, acrylonitrile-butadiene-styrene/polycarbonate blend, acrylonitrile-butadiene-styrene/polyamide blend, styrene-butadiene copolymer, and polymethyl methacrylate.

6. The process according to any of claims 1 to 5, wherein the molding (1) made of polymer foam has been manufactured from a polymer foam with a proportion of interstices in the range from 10 to 50%.

7. The process according to any of claims 1 to 6, wherein the melt temperature of the thermoplastic polymer applied in step (b) is in the range from 180 to 260°C.

8. The process according to any of claims 1 to 7, wherein the temperature of the mold (3) is controlled to a temperature in the range from 10 to 60°C.

9. The process according to any of claims 1 to 8, wherein the thickness of the functional layer (37) is in the range from 0.2 to 10 mm.

10. The process according to any of claims 1 to 9, wherein functional elements (41) have been molded onto the functional layer (37).

## Revendications

1. Procédé de fabrication d'un composant composite (33), comprenant un corps moulé (1) en une mousse polymère thermoplastique à base d'un polyuréthane thermoplastique expansé (E-TPU), et une couche fonctionnelle (37) en un thermoplastique non moussé, comprenant les étapes suivantes :
(a) le chargement du corps moulé (1) en une mousse polymère thermoplastique dans un outil de moulage (3),
(b) l'application d'un polymère thermoplastique par un processus d'injection, la pression lors de l'application du polymère thermoplastique étant inférieure à 100 bar,
la mousse polymère thermoplastique étant une mousse particulaire et la surface de la pièce moulée (1) en une mousse polymère étant prétraitée, le prétraitement de la surface de la pièce moulée (1) en une mousse polymère comprenant un traitement corona ou un traitement plasma.

2. Procédé selon la revendication 1, **caractérisé en ce que** le processus d'injection est un processus de moulage par injection, un processus de compression par injection ou un processus de gaufrage par injection.

3. Procédé selon la revendication 2, **caractérisé en ce que** le processus de moulage par injection est réalisé avec une pression de moins de 100 bar, une pression secondaire de moins de 50 bar et une vitesse d'injection de moins de 100 mm/s.

4. Procédé selon l'une quelconque des revendications 1 à 3, **caractérisé en ce que** la mousse polymère thermoplastique est une mousse particulaire.

5. Procédé selon l'une quelconque des revendications 1 à 4, **caractérisé en ce que** le polymère thermoplastique qui est appliqué à l'étape (b) est choisi parmi le polyamide, le polyuréthane thermoplastique, l'acrylonitrile-butadiène-styrène, le styrène-acrylonitrile, l'ester acrylique-styrène-acrylonitrile, le mélange ester acrylique-styrène-acrylonitrile/polycarbonate, le polycarbonate, le mélange acrylonitrile-butadiène-styrène/polycarbonate, le mélange acrylonitrile-butadiène-styrène/polyamide, le copolymère styrène-butadiène et le polyméthacrylate de méthyle.

6. Procédé selon l'une quelconque des revendications 1 à 5, **caractérisé en ce que** la pièce moulée (1) en une mousse polymère est fabriquée à partir d'une mousse polymère présentant une proportion de poches dans la plage allant de 10 à 50 %.

7. Procédé selon l'une quelconque des revendications 1 à 6, **caractérisé en ce que** la température en masse du polymère thermoplastique qui est appliqué à l'étape (b) se situe dans la plage allant de 180 à 260 °C.

8. Procédé selon l'une quelconque des revendications 1 à 7, **caractérisé en ce que** l'outil de moulage (3) est conditionné à une température dans la plage allant de 10 à 60 °C.

9. Procédé selon l'une quelconque des revendications 1 à 8, **caractérisé en ce que** la couche fonctionnelle (37) présente une épaisseur dans la plage allant de 0,2 à 10 mm.

10. Procédé selon l'une quelconque des revendications 1 à 9, **caractérisé en ce que** des éléments fonctionnels (41) sont formés sur la couche fonctionnelle (37).
